# EUROPÄISCHE PATENTSCHRIFT

(11) **EP 0 446 655 B1**
(45) Veröffentlichungstag und Bekanntmachung des Hinweises auf die Patenterteilung: **28.07.1993**
(21) Anmeldenummer: 91102302.6
(22) Anmeldetag: 19.02.1991
(51) Int. Cl.: E05F 15/10, F16D 7/02

(54) **Selbsthemmendes Schneckenradgetriebe in einem Schnelllauftorantrieb**
Self-locking worm gear for a high speed door drive
Transmission à vis sans fin à blocage automatique pour un entraînement de porte à haut régime

(30) Priorität: 16.03.1990 DE 4008443
(43) Veröffentlichungstag der Anmeldung: 18.09.1991
(73) Patentinhaber: W.u.H. Neukirchen GmbH & Co. KG, D-41747 Viersen (DE)
(72) Erfinder: Spickers, Günter, W-4155 Grefrath (DE)
(74) Vertreter: Cohausz & Florack Patentanwälte

(56) Entgegenhaltungen:
- EP-A- 0 266 531
- DE-A- 3 420 789
- DE-A- 3 631 576
- FR-A- 2 626 310
- US-A- 1 668 880

## Beschreibung

Die Erfindung bezieht sich auf ein selbsthemmendes Schneckenradgetriebe in einem Schnellauftorantrieb für Flügeltore, bei dem das von einem Motor angetriebene Schneckenradgetriebe über ein Untersetzungsgetriebe mit einer Kurbel eines Torflügels antriebsmäßig verbunden ist, wobei im Antriebszug zwischen dem Motor und der Kurbel als kombinierte Rutsch- und Schaltkupplung eine zwischen dem Schneckenrad und der Antriebswelle des Schneckenradgetriebes angeordnete Kegelkupplung vorgesehen ist, deren bewegliche Kupplungshälfte von einem, von einer vorgespannten, durch ein Schaltglied in der Federkraft veränderbare Feder beaufschlagten Druckstück in Schließrichtung beaufschlagt ist, wobei das Schaltglied am Druckstück derart eingreift, daß die bewegliche Kupplungshälfte der Kegelkupplung vom Druck der Feder entlastbar ist, wobei das Schneckenradgetriebe in einem Getriebegehäuse angeordnet ist.

Bei einem Schnellauftorantrieb besteht die Vorschrift, daß sowohl beim Öffnungs- als auch Schließvorgang der bzw. die Torflügel beim Auftreffen auf ein Hindernis nur mit einer vorbestimmten maximalen Kraft auf das Hindernis einwirken dürfen. Dieser Vorschrift wird mit einer im Getriebe eingebauten Rutschkupplung Genüge getan. Im geschlossenen Zustand werden die Flügel durch den Torantrieb, und zwar durch das selbsthemmende Schneckenradgetriebe, geschlossen gehalten. Da vorgeschrieben ist, daß bei Ausfall des motorischen Antriebes im Notfall das Tor sich schnell öffnen läßt, ist eine von Hand einschaltbare Schaltkupplung vorgesehen. Bei einer bekannten Ausführung ist in diesem Fall das als Stirnradgetriebe ausgebildete Untersetzungsgetriebe über ein ausrückbares Stirnrad trennbar. Abgesehen davon, daß der Aufwand für die Rutschkupplung und die Schaltkupplung groß ist, ist bei dem Stirnradgetriebe von Nachteil, daß beim Ausrücken eines Stirnrades unter Last das Stirnrad unzulässig stark belastet wird.

Aus der gattungsbildenden europaïschen Patentanmeldung EP 0266531 A3 ist ein Antriebsaggregat für einen Torantrieb bekannt, bei dem diese Probleme nicht auftreten. Bei diesem Torantrieb ist die bewegliche Hälfte einer zwischen einem selbsthemmenden Schneckengetriebe und einer Getriebeabtriebswelle angeordneten Kupplung über ein Druckstück durch eine Tellerfeder belastet, die an einer auf die Abtriebswelle aufgeschraubten Mutter abgestützt ist und gemeinsam mit dieser Welle rotiert. Die bewegliche Kupplungshälfte kann durch axiales Verschieben eines Stößels von der Kraft der Tellerfeder entlastet werden, der durch eine an einem Ende der Getriebeabtriebswelle eingelassene axiale Längsbohrung auf einen in einer Querbohrung der Getriebeabtriebswelle einsitzenden in axialer Richtung der Welle verschiebbaren Querkeil einwirkt, dessen Enden wiederum an dem Druckstück anliegen. Die axiale Verschiebung des Stößels kann bei Bedarf durch Verdrehen einer Kurbel hervorgerufen werden, die über eine Stellschraube mit dem Stößel verkoppelt ist. Der Nachteil dieser Vorrichtung liegt in dem komplizierten Aufbau und der Vielzahl von Bauelementen, die z.B. für die Entkopplung der Drehbewegung von Stößel und Getriebewelle benötigt werden. Darüber hinaus führen die in dem Ende der Getriebeabtriebswelle notwendigen Bohrungen zu einer Schwächung der Getriebeabtriebswelle gerade in dem Bereich, in dem die Kräfte von dem Antriebsmotor auf die Welle übertragen werden. Schließlich besteht bei der bekannten Vorrichtung die Gefahr eines Verkantens des Stößels in der Längsbohrung der Welle, durch die die Betriebssicherheit des Getriebes beeinträchtigt wird.

Neben dem vorangehend beschriebenen Getriebe ist aus der DE-OS 36 31 576 ein elektrischer Antrieb für eine Falttür bekannt, bei dem die Kraft eines Elektromotors über ein Schneckenradgetriebe und eine Kegelkupplung mit veränderlichem Rutschmoment auf die Falttür übertragen wird. Dazu weist diese Vorrichtung ein Betätigungsglied auf, das während der Drehbewegung beim Öffnen und Schließen der Tür durch Abrollen auf einer kreisförmigen Keilfläche axial verschoben wird. Dieses Verschieben bewirkt gleichzeitig eine Änderung des Federwegs eines als Kupplungsfeder ausgebildeten Tellerpaketes, das zwischen dem äußeren, angetriebenen verschiebbaren Ring der Kegelkupplung und dem Betätigungsglied eingespannt ist. Der Vorteil dieser Vorrichtung liegt zum einen in dem hohen Drehmoment, das von der Kegelkupplung übertragen werden kann, zum anderen ist bei dieser Vorrichtung die Gefahr der Verletzung von Personen durch Einklemmen in der Tür während des Schließens verringert, da der Verlauf des Rutschmoments so gewählt werden kann, daß nur zu Beginn der Drehbewegung bei vollständig geöffneter oder geschlossener Tür das größtmögliche Drehmoment übertragen wird. Nachteilig erweist sich jedoch, daß die Kegelkupplung beispielsweise bei einer Blockierung des Getriebes oder der Falttür nicht vollständig getrennt werden kann. Ein weiterer Nachteil dieser Vorrichtung besteht darin, daß das Federpaket schon während der Montage der Vorrichtung vorgespannt ist und alle weiteren Elemente der Kupplung nur unter Krafteinwirkung der Federn zusammengefügt werden können.

Der Erfindung liegt die Aufgabe zugrunde, ein leicht montierbares selbsthemmendes Schneckenradgetriebe der gattungsgemäßen Art zu schaffen, bei dem die Forderungen nach einem maximal zulässigen Antriebsmoment für den Torflügel und nach einer Abkupplung des Torflügels vom Antrieb mit konstruktiv einfacheren Mitteln und in robusterer Ausführung als beim Stand der Technik erfüllt werden.

Diese Aufgabe wird erfindungsgemäß bei einem Schneckenradgetriebe der eingangs genannten Art dadurch gelöst, daß die Feder außerhalb des Getriebegehäuses angeordnet und an diesem abgestützt ist, daß das Schaltglied zwischen dem Druckstück und einem Widerlager am Getriebegehäuse angeordnet und als Spannkeil ausgebildet ist und daß das Schaltglied ein verdrehbarer Ring ist, der an ortsfesten Keilkörpern am Getriebegehäuse abgestützt ist.

Die erfindungsgemäßen Ausgestaltung des Schneckenradgetriebes ermöglicht es, die Vorteile einer Kegelkupplung zu nutzen und gleichzeitig diese Kegelkupplung bei geringem Schaltweg vollständig zu trennen. Durch das Verlegen der für die Erzeugung der Kupplungskraft erforderlichen Feder aus dem Bereich der Kupplung heraus können die einzelnen Elemente des Getriebes kraftfrei zusammengesetzt werden, da die Tellerfeder nun erst im letzten Montageschritt gebaut wird. Darüber hinaus ist die Störanfälligkeit des erfindungsgemäßen Getriebes gering, da auch der Mechanismus zum Trennen der Kupplung außerhalb des Getriebegehäuses angeordnet ist und somit das Getriebe und die Kupplung selbst durch ein vollständig geschlossenes Gehäuse gegen Verschmutzung geschützt ist.

Bei dem erfindungsgemäßen Schneckenradgetriebe sind wie beim Stand der Technik die Funktionen von Rutschkupplung und Schaltkupplung in einer einzigen Kupplung, und zwar der Kegelkupplung zusammengefaßt. Eine solche Kegelkupplung ist bei entsprechender Druckbeaufschlagung durch die vorgespannte Feder zum einen in der Lage, die notwendigen hohen Drehmomente bis zu einem über die Vorspannung der Feder einstellbaren Moment zu übertragen, und zum anderen läßt sie sich durch Druckentlastung schnell lösen, so daß wegen der Abtrennung vom selbsthemmenden Schneckenradgetriebe der Torflügel sich leicht von Hand öffnen läßt. Der erforderliche Schaltweg ist äußerst klein, weil wegen der Anordnung des Druckstückes zwischen der Feder und der Kupplung die Kraft der Feder schon bei kleinstem Stellweg vollständig von der Kupplung genommen werden kann. Aufwendige Schaltkupplungen an dem Stirnradgetriebe mit den beim Schalten bruchgefährdeten Stirnrädern sind nicht länger erforderlich.

Gemäß der Erfindung ist das Schaltglied zwischen dem Druckstück und einem Widerlager am Getriebegehäuse angeordnet und als Spannkeil ausgebildet, wobei das Schaltglied ein verdrehbarer Ring ist, der an ortsfesten Keilkörpern am Getriebegehäuse abgestützt ist. Da für die Druckentlastung der Kegelkupplung nur ein geringer axialer Weg erforderlich ist, läßt sich über einen solchen ringförmigen Spannkeil mit entsprechend flacher Steigung die Kegelkupplung gegen die starke Kraft der Feder, die vorzugsweise eine Tellerfeder ist, lösen, ohne daß für das Schalten von der Bedienungsperson große Kräfte aufgebracht werden müssen.

In einer Ausgestaltung der Erfindung kann das Schaltglied sich mit Rollen an den Keilkörpern abstützen.

Nach einer weiteren Ausgestaltung der Erfindung ist zwischen dem Druckstück und der Kupplungshälfte ein Axialdrucklager als Druckkraftübertragungsglied angeordnet. Auf diese Art und Weise wird selbst bei hohem axialen Druck die Drehbeweglichkeit der Kegelkupplung nicht beeinträchtigt.

Im folgenden wird die Erfindung anhand einer ein Ausführungsbeispiel darstellenden Zeichnung naher erläutert. Im einzelnen zeigen:
- Figur 1: ein Flügeltor mit zwei faltbaren Flügeln und einem Schnellauftorantrieb mit Kurbel in schematischer Darstellung in Aufsicht
**und**
- Figur 2: ein selbsthemmendes Schneckenradgetriebe des Schnellauftorantriebes gemäß Figur 1 im Axialschnitt.

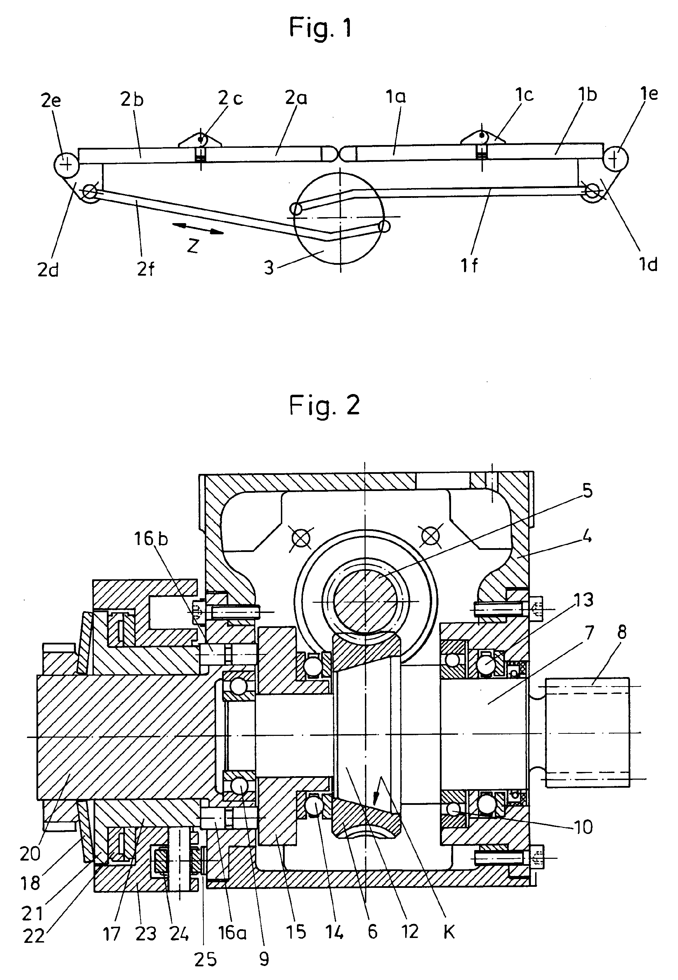

Das in Figur 1 dargestellte Flügeltor weist zwei faltbare Flügel 1a,1b,2a,2b mit Faltgelenken 1c,2c auf. Die Flügel 1a,1b sind um Drehachsen 1e,2e mittels Schwenkarmen 1d,2d verschwenkbar. Die Verschwenkung der Flügel erfolgt über Kurbelarme 1f,2f einer Kurbel 3 eines gemeinsamen Torantriebes.

Der Torantrieb besteht aus einem in der Zeichnung nicht dargestellten Untersetzungsgetriebe, beispielsweise einem Stirnradgetriebe, das die Kurbel 3 antreibt, einem in Figur 2 dargestellten selbsthemmenden Schneckenradgetriebe und einem auf Rechts- und Linkslauf umschaltbaren, in der Zeichnung nicht dargestellten Motor. Die Geometrie der Kurbel 3 mit ihren Kurbelarmen 1f,2f und der Schwenkarme 1d,2d ist so gewählt, daß die Kurbel 3 aus der in Figur 1 gezeigten Stellung weniger als 180° verdreht werden muß, um die Flügel 1a,1b,2a,2b vollständig zu öffnen. In der in Figur 1 dargestellten Stellung lassen sich die Flügel durch Druck auf sie nicht öffnen, weil wegen der gewählten Geometrie und des selbsthemmenden Schneckenradgetriebes eine Verdrehung der Kurbel 3 nicht möglich ist. Ohne Antriebsmotor läßt sich das Tor nur nach Betätigen der Schaltkupplung öffnen, wie noch im einzelnen zu beschreiben sein wird.

Das in Figur 2 dargestellte selbsthemmende Schneckenradgetriebe besteht aus einem Gehäuse 4 mit einer darin gelagerten, von einem außen am Gehäuse 4 angeflanschten Motor angetriebenen Schneckenwelle 5 sowie einem Schneckenrad 6, das mit einer im Gehäuse 4 gelagerten Antriebswelle 7 verbunden ist. Die Welle 7 weist außerhalb des Gehäuses 4 ein Stirnrad 8 auf, das Teil des am Gehäuse 4 angeflanschten, in der Zeichnung aber nicht dargestellten, als Stirnradgetriebe ausgebildeten Untersetzungsgetriebes ist. Die Welle 7 ist mit Lagern 9,10 verdrehbar im Gehäuse 4 gelagert. Auf ihr ist eine Kegelkupplung K angeordnet, deren eine Kupplungshälfte das als Ring ausgebildete Schneckenrad 6 und deren andere Kupplungshälfte ein fest auf der Welle 7 angeordneter Kegelstumpf 12 ist. Das die eine Kupplungshälfte bildende Schneckenrad 6 besteht wie üblich aus Bronze, während der die andere Kupplungshälfte bildende Kegelstumpf 12 wie die Welle 7 aus Stahl besteht. Der Kegelstumpf 12 mit der Welle 7 ist über ein Drucklager 13 axial am Gehäuse 4 abgestützt.

Um die Kegelkupplung K mit einem vorbestimmten axialen Druck im eingeschalteten Zustand zu halten, wirkt auf die Kupplungshälfte 6 über ein Axialdrucklager 14 ein Druckkraftübertragungsglied 15 ein, das verschiebbar auf der Welle 7 angeordnet ist. Auf dieses Druckübertragungsglied 15 wirken im Gehäuse 4 axial beweglich gelagerte Stößel 16a,16b ein, auf die ein Druckstück 17 einwirkt, das von einer Tellerfeder 18 beaufschlagt ist. Die Tellerfeder 18 ist an einer Nutmutter 19 aus einem am Gehäuse 4 befestigten Zapfen 20 abgestützt. Zwischen einem Kragen 21 des Druckstückes 17 und der Außenseite des Gehäuses 4 befindet sich unter Zwischenschaltung eines Gleitringes 22 ein Schaltglied 23. Das Schaltglied 23 ist auf der Gehäuseseite mit Stützrollen 24 bestückt, denen am Gehäuse 4 gehaltene, bogenförmige Keilstücke 25 zugeordnet sind. Beim Verdrehen des Schaltgliedes 23 verlagert sich somit das Schaltglied 23 axial entsprechend dem Anstieg der Keilstücke 25.

Die Funktion der erfindungsgemäßen Rutsch- und Schaltkupplung ist folgende:

Bei eingeschalteter Kupplung wirkt die Druckkraft der Tellerfeder 18 entsprechend ihrer Einstellung an der Nutmutter 19 über das Druckstück 17, die Stößel 16a,16b, das Übertragungsglied 15 und das Drucklager 14 auf die Kupplungshälfte 6 ein, so daß die Kupplung eingeschaltet ist und entsprechend der Vorspannung der Tellerfeder 18 ein Drehmoment bis zu einem bestimmten maximalen Grenzdrehmoment zu übertragen imstande ist. Wird dieses Grenzdrehmoment überschritten, beispielsweise indem der Flügel 1a-2b des Flügeltores blockiert ist, tritt Schlupf zwischen dem die eine Kupplungshälfte bildenden Schneckenrad 6 und dem die andere Kupplungshälfte bildenden Kegelstumpf 12 bzw. der Abtriebswelle 7 ein. Soll dagegen bei einem Stromausfall das Tor geöffnet werden, wird das Schaltglied 23 derart verdreht, daß es unter Abstützung an den leicht ansteigenden Keilkörpern 25 in der Zeichnung nach links verschoben wird, wobei es das Druckstück 17 mitnimmt und die Tellerfeder 18 weiter spannt. Dadurch wird das Schneckenrad 6 von der Druckkraft der Feder 18 entlastet, so daß die Welle 7 sich gegenüber dem Schneckenrad 6 frei drehen kann. Das Tor läßt sich dann widerstandslos öffnen.

Die besonderen Vorteile der Erfindung bestehen darin, daß bei einem selbsthemmenden Schneckenradgetriebe mit einer einzigen Kupplung sowohl das erforderliche hohe Drehmoment bis zu einem einstellbaren Grenzdrehmoment übertragen werden kann und eine Trennung zwischen Antrieb und Motor mit einfachen, aber robusten Mitteln in Kompaktbauweise des Getriebes erreicht wird.

## Patentansprüche

1. Selbsthemmendes Schneckenradgetriebe in einem Schnellauftorantrieb für Flügeltore (1a-2c), bei dem das von einem Motor angetriebene Schneckenradgetriebe über ein Untersetzungsgetriebe mit einer Kurbel (3) eines Torflügels (1a-2c) antriebsmäßig verbunden ist, wobei im Antriebszug zwischen dem Motor und der Kurbel (3) als kombinierte Rutsch- und Schaltkupplung eine zwischen dem Schneckenrad (6) und der Antriebswelle (7) des Schneckenradgetriebes angeordnete Kegelkupplung (K) vorgesehen ist, deren bewegliche Kupplungshälfte (6) von einem, von einer vorgespannten, durch ein Schaltglied (23) in der Federkraft veränderbare Feder (18) beaufschlagten Druckstück (17) in Schließrichtung beaufschlagt ist, wobei das Schaltglied (23) am Druckstück (17) derart eingreift, daß die bewegliche Kupplungshälfte (6) der Kegelkupplung (K) vom Druck der Feder (18) entlastbar ist, wobei das Schneckenradgetriebe in einem Getriebegehäuse (4) angeordnet ist,
**dadurch gekennzeichnet**,
- daß die Feder (18) außerhalb des Getriebegehäuses (4) angeordnet und an diesem abgestützt ist,
- daß das Schaltglied (23) zwischen dem Druckstück (17) und einem Widerlager (25) am Getriebegehäuse (4) angeordnet und als Spannkeil ausgebildet ist und
- daß das Schaltglied (23) ein verdrehbarer Ring ist, der an ortsfesten Keilkörpern (25) am Getriebegehäuse (4) abgestützt ist.

2. Schneckenradgetriebe nach Anspruch 1,
**dadurch gekennzeichnet**, daß das Schaltglied (23) sich mit Rollen (24) an den Keilkörpern (25) abstützt.

3. Schneckenradgetriebe nach einem der Ansprüche 1 oder 2,
**dadurch gekennzeichnet**, daß zwischen dem Druckstück (17) und der Kupplungshälfte (6) ein Axialdrucklager (14) als Druckübertragungsglied angeordnet ist.

## Claims

1. A self-locking worm gearing in a high-speed gate drive for double-wing gates (1a-2c), wherein the motor-driven worm gearing is drivably connected via a step-down transmission to a crank (3) above a gate wing (1a-2c), while provided as a combined sliding and gear shift clutch in the drive chain between the motor and the crank (3) is a cone clutch (K) which is disposed between the worm gear (6) and the driving shaft (7) of the worm gearing and whose movable clutch half (6) is acted upon in the closure direction by a thrust member (17) acted upon by a spring (18) whose spring force can be changed via an operating member (23), the operating member (23) so engaging with the thrust member (17) that the movable clutch half (6) of the cone clutch (K) can be relieved of the pressure of the spring (18), the worm gearing being disposed in a gear housing (4), characterized in that
- the spring (18) is disposed outside the gear housing (4) and bears thereagainst,
- the operating member (23) is disposed on the gear housing (4) between the thrust member (17) and an abutment and takes the form of a clamping wedge (25), and
- the operating member (23) is a rotatable ring which bears against fixed wedge members (25) on the gear housing (4).

2. A worm gearing according to claim 1, characterized in that the operating member (23) bears against the wedge members (25) via rollers (24).

3. A worm gearing according to one of claims 1 or 2, characterized in that a thrust bearing (14) is disposed as a thrust-transmitting element between the thrust member (17) and the clutch half (6).

## Revendications

1. Engrenage à vis autobloquant dans un entraînement de porte à grande vitesse pour portes à deux battants (1a-2c), dans lequel l'engrenage à vis entraîné par un moteur est relié, par l'intermédiaire d'un engrenage réducteur, à entraînement à la manivelle (3) d'un battant (1a-2c), un accouplement conique (K) disposé entre la roue tangente (6) et l'arbre moteur (7) de l'engrenage à vis étant prévu dans le train moteur entre le moteur et la manivelle (3) en tant qu'accouplement combiné à glissement et embrayage, dont le demi-accouplement mobile (6) est soumis à l'action en direction de fermeture d'un membre de pression (17) soumis à l'action d'un ressort (18) précontraint à force de ressort modifiable par un organe de manoeuvre (23), l'organe de manoeuvre (23) venant en prise sur le membre de pression (17) de manière telle que le demi-accouplement mobile (6) de l'accouplement conique (K) peut être déchargé de la pression du ressort (18), l'engrenage à vis étant disposé dans un carter d'engrenage (4),
caractérisé en ce
- que le ressort (18) est disposé à l'extérieur du carter d'engrenage (4) et appuyé sur celui-ci,
- que l'organe de manoeuvre (23) est disposé entre le membre de pression (17) et une butée (25) sur le carter d'engrenage (4) et est réalisé sous forme de coin de serrage, et
- que l'organe de manoeuvre (23) est une bague rotative qui est appuyée sur des corps de coincement (25) fixes sur le carter d'engrenage (4).

2. Engrenage à vis selon la revendication 1, caractérisé en ce que l'organe de manoeuvre (23) s'appuie sur les corps de coincement (25) par des rouleaux (24).

3. Engrenage à vis selon l'une des revendications 1 et 2, caractérisé en ce qu'un palier de butée axiale (14) est disposé entre le membre de pression (17) et le demi-accouplement (6) en tant qu'organe de transmission de pression.
